Europäisches Patentamt

European Patent Office

Office européen des brevets

(19)

(11) **EP 1 690 788 A1**

(12) **EUROPEAN PATENT APPLICATION**

(43) Date of publication:
**16.08.2006 Bulletin 2006/33**

(51) Int Cl.:
*B64C 39/06* (2006.01)     *B64C 29/00* (2006.01)
*B64C 39/08* (2006.01)

(21) Application number: **05425074.1**

(22) Date of filing: **15.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **C.R.F. Società Consortile per Azioni 10043 Orbassano (Torino) (IT)**

(72) Inventors:
• **Perlo, Pietro**
  **10043 Orbassano (Torino) (IT)**
• **Bollea, Denis**
  **10043 Orbassano (Torino) (IT)**

(74) Representative: **Rondano, Davide**
  **Jacobacci & Partners S.p.A.**
  **Corso Emilia, 8**
  **10152 Torino (IT)**

(54) **An aircraft of compact dimensions**

(57)    The aircraft (10) comprises a fuselage (12), a main wing (16) substantially of disc-like shape positioned above the fuselage (12), and a secondary wing (18) which intersects the fuselage (12) and is provided with movable control parts. The aircraft further comprises a main propulsion system including an internal combustion engine intended to drive a propeller (26) positioned at the rear of the fuselage (12) and a secondary propulsion system for the propulsion of the aircraft in a direction perpendicular to the ground. The secondary propulsion system includes a matrix of nozzles (32) positioned on the lower surface of the secondary wing (18) and arranged to emit the exhaust gases coming from the main engine in the form of micro-jets. The main propeller propulsion system and the secondary nozzle propulsion system are selectively controllable in such a way that the aircraft is able to perform three different take-off modes, that is to say a first, conventional take-off mode in which only the main propulsion system is used, a second (STOL) take-off mode in which both the main propulsion system and the secondary propulsion system are used, and a third (VTOL) take-off mode in which only the secondary propulsion system is used.

**Fig.1**

**Description**

The present invention relates to an aircraft of compact dimensions intended for the transport of one person and able to take off in a conventional STOL (Short Take Off and Landing) mode or in a VTOL (Vertical Take Off and Landing) mode.

The object of the invention is to provide an aircraft of the above-specified type which has a configuration such as to allow a wide flexibility of use in a plurality of fields of application.

This and other objects are achieved according to the invention by an aircraft having the characteristics defined in the annexed Claim 1. Further advantageous characteristics of the invention are specified in the dependent Claims.

In summary, the invention is based on the idea of providing an aircraft of compact dimensions which comprises a fuselage, a main wing substantially of disc-like shape positioned above the fuselage and a secondary wing which intersects the fuselage and is provided with movable parts for control of the aircraft. By virtue of the arrangement of an upper disc-like wing (main wing) and a lower wing (secondary wing) the aircraft has sufficient wing area to allow low speed flight.

Further characteristics and advantages of the invention will become clearly apparent form the following detailed description, given purely by way of non-limitative example, with reference to the attached drawings, in which:

Figure 1 is a perspective view of a first preferred embodiment of an aircraft according to the present invention;

Figure 2 is a further perspective view of the aircraft of Figure 1;

Figure 2A is an enlarged view of the detail A of Figure 2;

Figure 3 is a plan view from above of the aircraft of Figure 1;

Figure 4 is a side elevation view of the aircraft of Figure 1;

Figure 5 is a rear elevation view of the aircraft of Figure 1;

Figure 6 is a graph which shows how the lift coefficient of a disc-like wing with two different values of the aspect ratio varies upon variation of the angle of attack of the wing;

Figure 7 is a graph which shows how the vertical thrust provided by a rear motor and by a matrix of micro-jets positioned under a secondary wing of the aircraft of Figure 1 varies upon variation of the speed of the aircraft in the case of take off in STOL mode;

Figure 8 is a graph which illustrates the different take off modes which can be achieved with an aircraft according to the invention;

Figure 9 is a diagram which schematically illustrates the structure of an electronic control system for control of the attitude and course of an aircraft according to the invention;

Figure 10 is a perspective view of a variant embodiment of an aircraft according to the present invention;

Figure 11 is a plan view from above of the aircraft of Figure 10;

Figure 12 is a side elevation view of the aircraft of Figure 10; and

Figure 13 is a front elevation view of the aircraft of Figure 10.

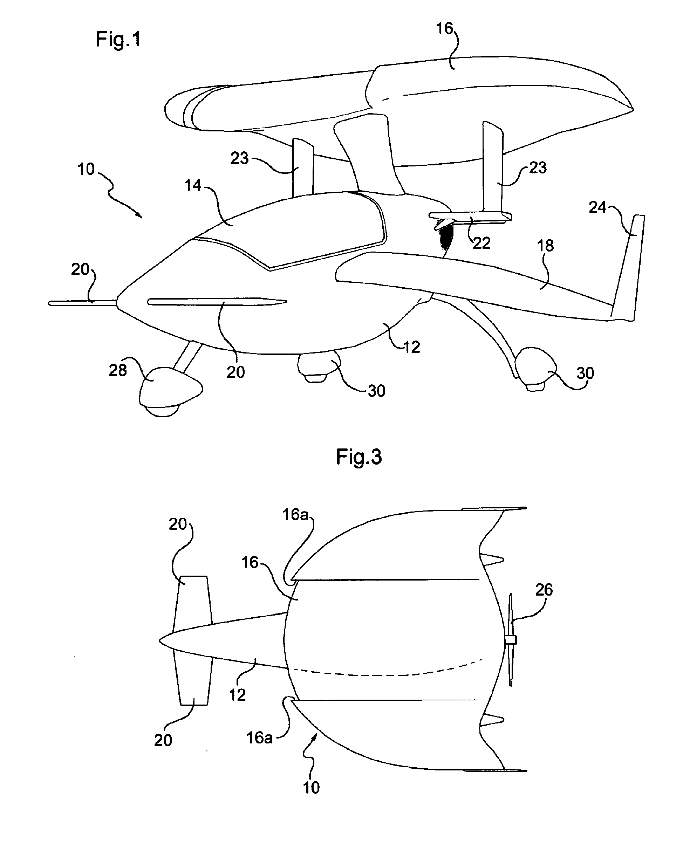

An aircraft according to a first embodiment of the invention, generally indicated 10 in Figures 1 to 5, has a general configuration of the "canard" type and fundamentally comprises:

- a fuselage 12 defining a cockpit 14 dimensioned in such a way as to be able to house a pilot;
- a main wing 16 substantially of disc-like shape positioned above the fuselage 12;
- a secondary wing 18 which intersects the fuselage 12 and is provided with movable parts, known per se, for control of the aircraft 10;
- a pair of horizontal front surfaces 20 each comprising a fixed part secured to the front part of the fuselage 12 and a movable part for control of the aircraft 10;
- a pair of rear horizontal surfaces 22 fixed to the rear part of the fuselage 12 and connected to the main wing 16 by means of vertical surfaces 23 acting as rudders;
- a pair of vertical stabiliser surfaces 24, commonly known as "winglets", positioned at the ends of the secondary wing 18 for stabilising the aircraft 10 in the yaw plane;
- a propulsion system positioned in the rear part of the fuselage 12 and comprising a pusher propeller 26;
- a front fixed or retractable landing gear 28;
- a rear fixed or retractable landing gear 30 having two wheels or a pair of rear landing gears each having one wheel; and
- one or more inertial platforms positioned in the front part of the fuselage 12 for controlling and correcting the attitude and course of the aircraft 10.

As mentioned above, the fuselage 12 of the aircraft 10 has, according to this first embodiment of the invention, a configuration of the "canard" type which differs from the conventional configuration in that rather than extending toward the rear to carry the tail unit it is truncated at the rear to receive the propulsion unit having the pusher propeller 26. The function of the horizontal tailplane is in this case performed by the pair of front surfaces 20 secured to the front part of the fuselage 12, whilst the function of the vertical tailplane is performed by the two vertical rudders 23 each of which connects one of the rear surfaces 22 to the main wing 16.

As is known, the main advantage of the "canard" configuration is that it is unlikely to stall. The front surfaces 20 are in fact designed in such a way as to reach the stall condition before the main wing 16. In this way, when the front surfaces 20 reach the critical angle (or stall angle) the main wing 16 is still in the condition in which it generates lift; the aircraft therefore tends to sink at its front and returns to a normal flight attitude. Thanks to the "canard" configuration, therefore, the aircraft 10 is able to recover level flight with ease.

Another advantage of the "canard" configuration lies in that the pilot in the cockpit 14 can enjoy optimum visibility, since the pusher propeller 26 is positioned at the rear of the fuselage 12.

Moreover, for the same applied power and useful load the performance of a "canard" aircraft is superior to that of the majority of conventional aircrafts, with consequent lower fuel consumption and therefore lower operating costs.

The form of the fuselage 12 is designed to minimise the air drag and to convey the airstream towards the propeller 26 (Coanda Effect) in such a way as to improve the overall efficiency of the aircraft and it is also ergonomically developed around the pilot.

As mentioned above, the main wing 16 is located above the fuselage 12 in order to increase the stability of the aircraft and has a substantially disc-like shape in order to make the aircraft more stable and controllable. The aerofoil of the wing 16 can be asymmetrical (for example, E421) in order to increase the overall lift of the aircraft, or symmetrical (for example, NACA0012).

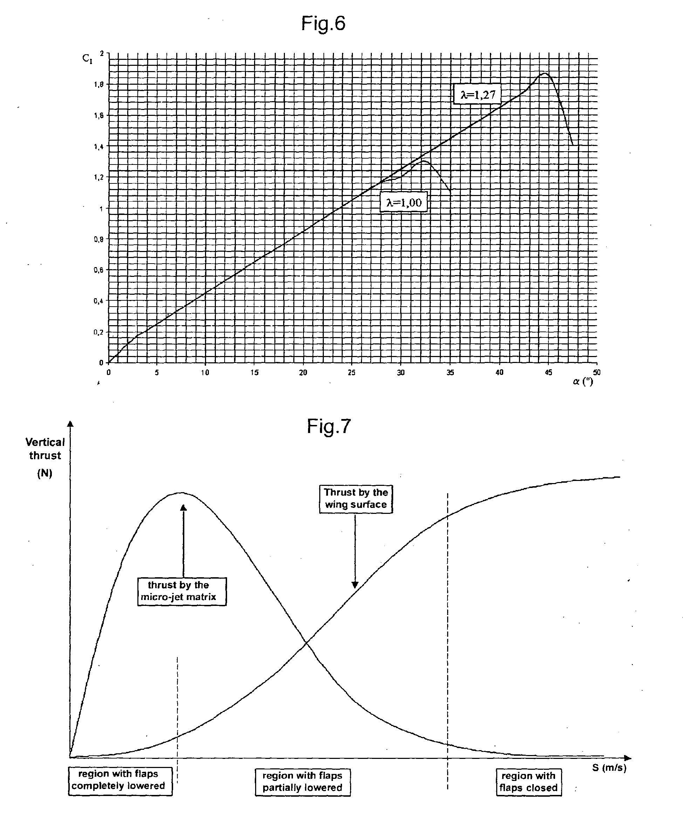

In Figure 6 is provided a graph which shows how the lift coefficient $C_1$ of a disc-like wing varies upon variation of the angle of attack $\alpha$ of the wing for two different values of the aspect ratio $\lambda$ of the wing, that is to say the ratio between the square of the wing span L and the wing area S. In the case of a perfectly circular shape of radius r one has:

$$\lambda = \frac{L^2}{S} = \frac{(2r)^2}{\pi r^2} = \frac{4}{\pi} \approx 1.27$$

From Figure 6 it can be seen that for $\lambda$=1.27 the lift coefficient $C_1$ increases up to an angle of attack of about 45° after which it falls sharply (stall). For $\lambda$=1, on the other hand, the lift coefficient $C_1$ increases up to an angle of attack of about 30°. The disc-like shape therefore makes it possible to reduce the risk of stall of the aircraft, since it ensures the continuity of the airstream up to an angle of attack of about 45°, against a stall angle of about 18°-20° of a conventional wing.

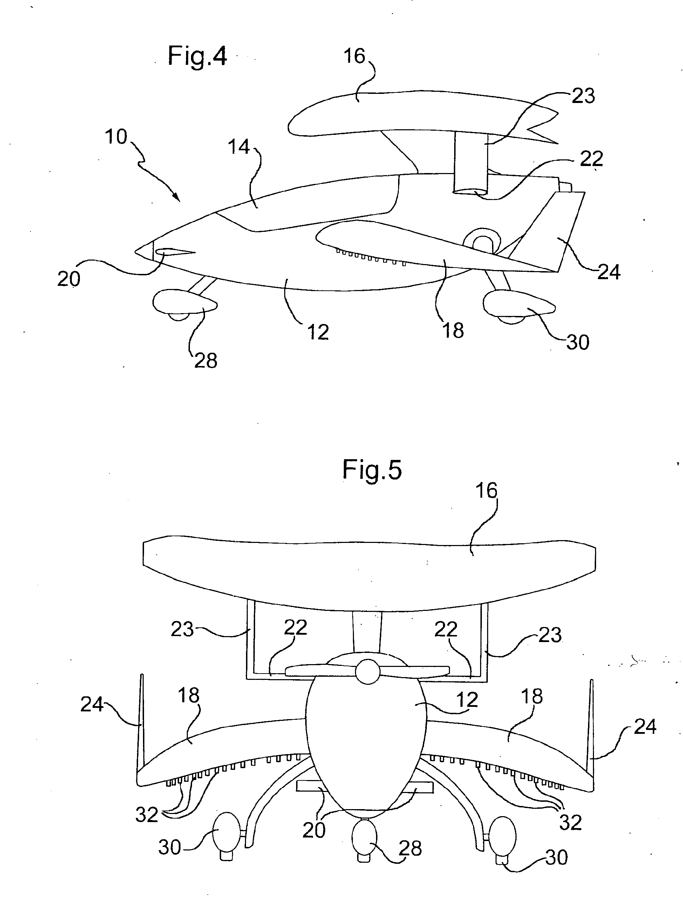

As can be seen in particular in the plan view of Figure 3, the profile of the leading edge of the main wing 16 has two discontinuities, indicated 16a, which make the flow locally more turbulent in order to improve the performance of the wing.

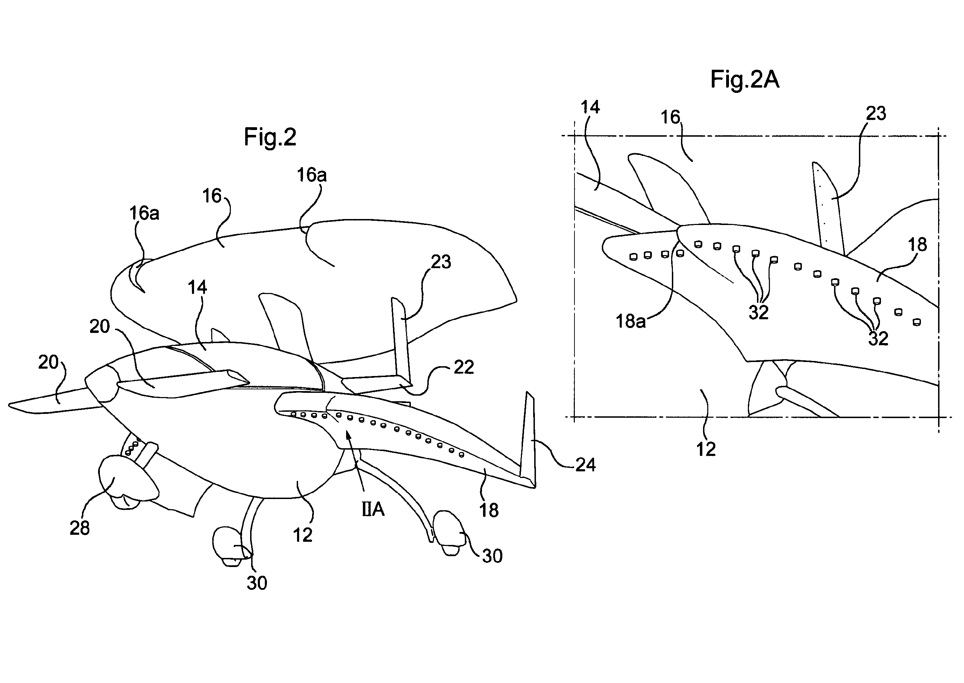

The secondary wing 18 intersects the fuselage 12 and advantageously utilises an aerofoil identical to that of the main wing 16. As for the main wing 16, the profile of the leading edge of the secondary wing 18 also has two discontinuities, indicated 18a (only one of which can be seen in Figure 2A), having the function of increasing the aerodynamic efficiency of the wing.

As mentioned above, at the ends of the secondary wing 18 there are two vertical stabilising surfaces 24 or "winglets" having the function of stabilising the aircraft 10 in the plane parallel to the ground. The two winglets 24, in fact, oppose the rotation of the aircraft 10 in the plane parallel to the ground (yawing movement), caused for example by gusts of side wind, maintaining the aircraft in the normal flight attitude.

In the front part of the aircraft 10 are located the two front surfaces 20 which extend horizontally from the fuselage 12 and include each a fixed part and a movable part. The two surfaces 20 have the function of controlling the turn, hose-up and dive manoeuvres of the aircraft 10, cooperating with the movable parts of the secondary wing 18.

At the rear part of the aircraft 10 are located the two rear surfaces 22 which are fixed to the fuselage 12 and connected to the main wing 16 by means of vertical surfaces 23 which function as rudders, as well as supports for the main wing 16. Both the rear horizontal surfaces 22 and the rear vertical surfaces 23 have a symmetrical aerofoil (for example, NACA0012). Moreover, the two horizontal surfaces 22 have an angle of attack such as to generate lift.

The propulsion unit of the aircraft 10 comprises a main engine (not illustrated) which drives the pusher propeller 26. The main engine is advantageously a common rail Diesel engine with multi-jet injection and active control of the valves. A Diesel engine is preferable over an Otto cycle engine because of its greater power density and greater energy density of the fuel (kerosene). As mentioned above, the propeller 26 is located in the rear part of the fuselage 12 and is of pusher type. In a constructional variant not illustrated, the propeller 26 is ducted in a rigid housing structure. The choice of a ducted propeller makes it possible to reduce the operating noise and further guarantees a greater protection.

To allow the aircraft 10 to operate in VTOL mode, in addition to the main engine mentioned above, which allows propulsion in a direction parallel to the ground, there is also a secondary propulsion system which allows propulsion in a direction perpendicular to the ground. This secondary propulsion system comprises a matrix of nozzles 32 positioned in the lower part of the leading edge of the secondary wing 18; as shown in Figures 2A and 5, from which nozzles the exhaust gases coming from the main engine are emitted in the form of micro-jets. The secondary propulsion system is arranged to function also as a system for stabilising the attitude of the aircraft during conventional flight, intended to control small corrections in the attitude. In this way the movable elements (flaps) of the secondary wing 18 and of the front surfaces 20 are utilised only for more important corrective manoeuvres.

The supply of the matrix of nozzles constituting the secondary propulsion system preferably takes place through a common rail injection system comprising the following components (known per se and not illustrated):

- a common rail, that is to say a manifold for collecting fuel and high-pressure combustion supporter, which has the form of a very elongate parallelepiped defining within it a cylindrical cavity and is made of steel to resist the high pressure present in it during operation;

- a fuel pump which draws the fuel and the combustion supporter from the respective tanks and delivers them to the common rail at a determined pressure, equal to the injection pressure;

- a two-way solenoid valve arranged to tap fuel from the delivery line of the fuel pump to regulate the pressure to the desired value;

- a similar two-way solenoid valve arranged to tap combustion supporter from the delivery line of the fuel pump; and

- a pressure sensor mounted on the common rail, the output signal from which is sent as a feedback signal to a closed-loop electronic control system for controlling the pressure.

The nozzles 32 are supplied from the common rail under the control of respective electromagnetic solenoid actuators. The common rail has the function of damping pressure oscillations due to the periodic opening of the actuators and at the same time to avoid delays in the pressure equalisation during transients and filling problems in the starting phase during which the common rail must be filled as rapidly as possible.

The common rail injection system utilised to supply the matrix of nozzles 32 makes it possible to adjust electronically the quantities of fuel and combustion supporter injected, and the injection pressure, as a function of the operating conditions of the propulsion system. In particular, the main advantages offered by the common rail injection system are a high flexibility of management of the injection pressure and the possibility of electronically controlling the main injection parameters in order to optimise the operation of the propulsion system.

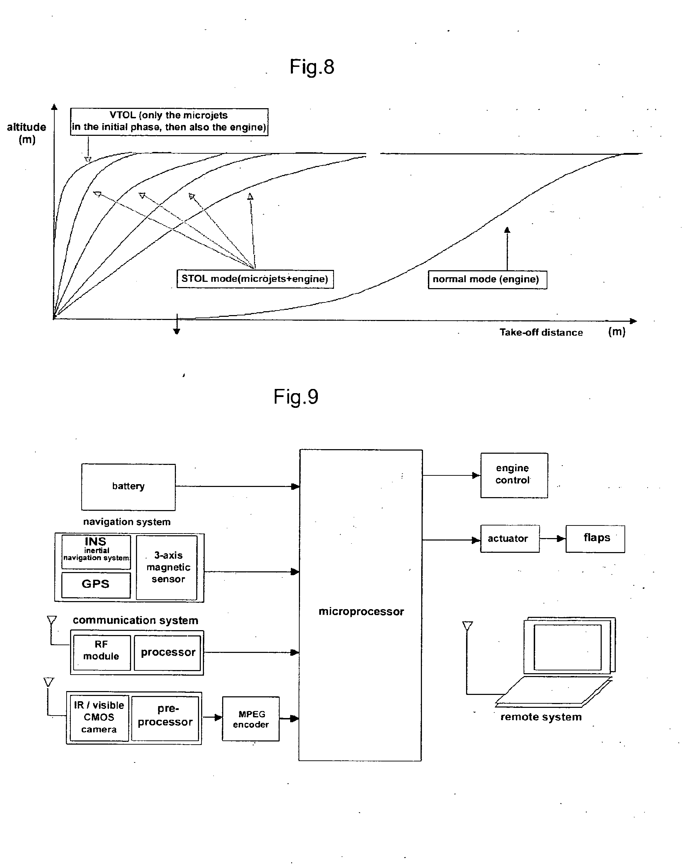

By using the main propeller propulsion system and the secondary nozzle propulsion system it is possible to achieve three different take-off modes illustrated in the graph of Figure 8 which plots the altitude of the aircraft as a function of the take-off distance.

A first take-off mode, of conventional type, uses only the main propulsion system positioned in the rear part of the aircraft. The conventional mode is that which requires the longest take-off distance, since the aircraft must reach a given minimum speed to be able to maintain flight.

A second take-off mode is the STOL mode, which uses both the main rear propulsion system and the secondary propulsion system comprising the matrix of nozzles 32 positioned under the secondary wing 18. In the graph of Figure 7 there is shown how the vertical thrust provided by the main rear propulsion system and by the secondary propulsion system comprising the matrix of nozzles 32 positioned under the secondary wing 18 of the aircraft of Figure 1 varies upon variation in the speed of the aircraft in the case of take-off in STOL mode. This take-off mode requires a shorter distance than the first since the vertical thrust generated by the matrix of nozzles supplements the low vertical thrust generated by the forward speed of the aircraft. Obviously, the more the vertical thrust provided by the matrix of nozzles the shorter is the take-off distance.

The third take-off mode is the VTOL mode, which uses only the secondary propulsion system. According to this mode the initial phase of take-off is exclusively vertical, after which the main propulsion system also intervenes as shown in Figure 6.

The aircraft according to the invention has two operating modes, that is to say a first operating mode in which it behaves as a conventional aircraft utilising the main rear propulsion system and a second operating mode in which the aircraft is able to hover at a predetermined height by utilising the matrix of nozzles.

The aircraft is provided in a manner known per se with an electronic control system having the function to control and correct the attitude and course of the aircraft (by controlling the main and secondary propulsion systems and the control surfaces), to manage the sensors installed on the aircraft (such as, for example, inertial navigation sensors constituted by gyroscopes, accelerometers, magnetic sensors formed with MEMS technology and GPS receivers) and to transmit data to the ground. An example of electronic control system is shown in Figure 9.

The aircraft is advantageously constructed with innovative materials of low weight and high stiffness, in particular with composite materials based on carbon fibres. The system for actuating the movable control surfaces (flaps) can be formed with materials of traditional type or with active materials ("smart materials"). These latter are materials able to change their mechanical characteristics if stimulated from the outside with signals of electrical, thermal, magnetic, etc type. Examples of active materials which could be utilised for the production of the system for actuating the flaps are ceramics and piezoelectric polymers, magneto-resistive materials, shape-memory materials, electroactive polymers and magnetorheological fluids.

The aerodynamic characteristics of the aircraft are for example as follows.

| | |
|---|---|
| Aerofoil: | EPPLER 421 |
| Angle of attack: | 2.5° |

(continued)

| Winglet aerofoil: | NACA 0012 |
|---|---|
| Rudder aerofoil: | NACA 0012 |
| Main wing area: | 6.45 m$^2$ |
| Secondary wing area: | 2.91 m$^2$ |
| Total wing area: | 9.36 m$^2$ |

In calculating the wing area no account has been taken of the frontal "canard" surfaces 20, since they do not contribute to the support of the aircraft during level flight (conventional operating mode). These surfaces on the other hand become important during take-off (but not in VTOL mode) since the inclination of the aircraft involves that these front surfaces also generate lift. During take-off the flaps are advantageously inclined by 60° downwardly in order to increase the lift of the wings and permit the aircraft to take off in a relatively short distance.

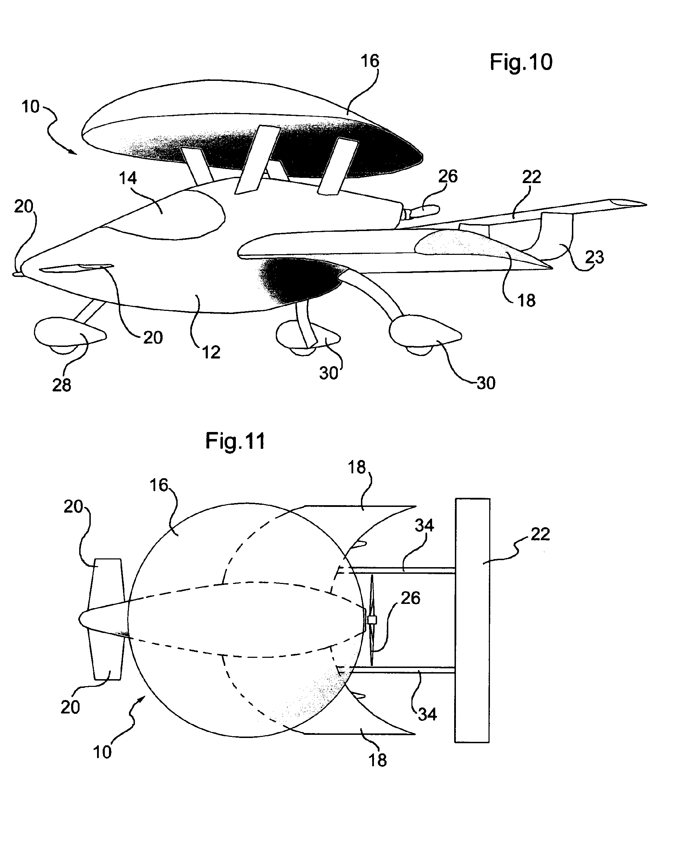

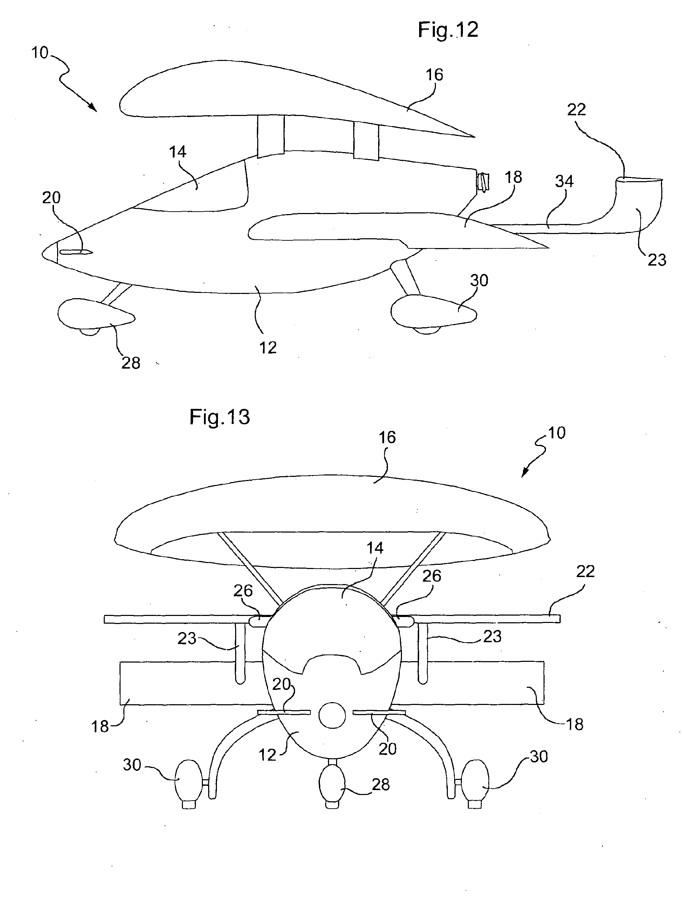

A second embodiment of an aircraft of compact dimensions according to the invention is illustrated in Figures 10 to 13, in which parts and elements identical to or corresponding to those of Figures 1 to 5 have been indicated with the same reference numerals.

This second embodiment of the invention differs from the first substantially only in that it has a conventional configuration rather than a "canard" configuration. In this case, therefore, the aircraft 10 fundamentally comprises:

- a fuselage 12 defining a cockpit 14 dimensioned in such a way as to be able to house a pilot;
- a main wing 16 of disc-like shape positioned above the fuselage 12;
- a secondary wing 18 which intersects the fuselage 12 and is provided with movable parts, known per se, for control of the aircraft 10;
- a pair of horizontal front surfaces 20 each including a fixed part and a movable part, secured to the front part of the fuselage 12 and having the function of controlling the aircraft 10;
- a rear tail unit comprising a rear horizontal surface 22 fixed to the upper ends of a pair of vertical surfaces 23 having the function of rudders, the said vertical surfaces being carried by respective longitudinal projections 34 which extend rearwards from the rear part of the fuselage 12; and
- a propulsion system positioned in the rear part of the fuselage 12 and comprising a pusher propeller 26.

As far as the aerofoils of the main and secondary wings, the landing gears, the propulsion system and the attitude and course control system are concerned, all remain as illustrated in relation to the first embodiment.

As will be understood in the light of the preceding description, the aircraft according to the invention lends itself to a wide range of possibilities of use. The aircraft finds application mainly in door-to-door transport in substitution for classic means of road transport, with respect to which it has the advantage of the reduction of travel times and fuel consumption. The aircraft can also be utilised in agriculture for spraying fertilisers or herbicides over wide areas of ground in place of helicopters.

Naturally, the principle of the invention remaining the same, the embodiments and details of construction can be widely varied with respect to what has been described and illustrated purely by way of non-limitative example.

**Claims**

1. An aircraft of compact dimensions, comprising a fuselage (12), a main wing (16) substantially of disc-like shape positioned above the fuselage (12), and a secondary wing (18) which intersects the fuselage (12) and is provided with movable parts for control of the aircraft (10).

2. An aircraft according to Claim 1, further comprising a pair of front horizontal surfaces (20) each comprising a fixed part secured to the front part of the fuselage (12) and a movable part for control of the aircraft (10).

3. An aircraft according to any one of the preceding Claims, further comprising a pair of rear horizontal surfaces (22) fixed to the rear part of the fuselage (12) and connected to the main wing (16) by means of vertical surfaces (23) having the function of rudders.

4. An aircraft according to any one of the preceding Claims, further comprising a pair of winglets (24) positioned at the ends of the secondary wing (18).

5. An aircraft according to any one of the preceding Claims, comprising a main propulsion system having a propeller (26) positioned at the rear of the fuselage (12).

6. An aircraft according to any one of the preceding Claims, coprising a front landing gear (28) and a pair of rear landing gears (30).

7. An aircraft according to any one of the preceding Claims, in which the profile of the leading edge of the main wing (16) and/or of the secondary wing (18) has, in plan view, at least two discontinuities (16a) intended to make the air flow locally more turbulent.

8. An aircraft according to Claim 3, in which both the rear horizontal surfaces (22) and the rear vertical surfaces (23) have a symmetrical aerofoil.

9. An aircraft according to Claim 3 or Claim 8, in which the two rear horizontal surfaces (22) have an angle of attack such as to generate lift.

10. An aircraft according to Claim 5, in which the main propulsion system comprises an internal combustion system intended to drive the propeller (26).

11. An aircraft according to Claim 5, in which the propeller (26) is ducted in a rigid housing structure.

12. An aircraft according to Claim 10, further comprising a secondary propulsion system for the propulsion of the aircraft in a direction perpendicular to the ground, the said secondary propulsion system including a matrix of nozzles (32) positioned on the lower surface of the secondary wing (18) and arranged to emit the exhaust gases coming from the main engine in the form of micro-jets.

13. An aircraft according to Claim 12, in which the secondary propulsion system is arranged to function also as an aircraft attitude stabilisation system during conventional flight.

14. An aircraft according to Claim 12, in which the main propeller propulsion system and the secondary nozzle propulsion system are selectively controllable in a manner such that the aircraft is able to perform three different take-off modes, that is to say a first, conventional take-off mode, in which only the main propulsion system is used, a second (STOL) take-off mode, in which both the main propulsion system and the secondary propulsion system are used, and a third (VTOL) take-off mode, in which only the secondary propulsion system is used.

15. An aircraft according to Claim 12, in which the secondary propulsion system is arranged to allow the aircraft (10) to hover at a predetermined height.

Fig.1

Fig.3

# Fig.2

# Fig.2A

EP 1 690 788 A1

## Fig.4

## Fig.5

## Fig.6

## Fig.7

## Fig.8

VTOL (only the microjets in the initial phase, then also the engine)

altitude (m)

STOL mode(microjets+engine)

normal mode (engine)

Take-off distance (m)

## Fig.9

battery

engine control

**navigation system**

INS
inertial navigation system

3-axis magnetic sensor

GPS

microprocessor

actuator

flaps

**communication system**

RF module

processor

IR / visible CMOS camera

pre-processor

MPEG encoder

remote system

Fig.10

Fig.11

Fig.12

Fig.13

European Patent
Office

**EUROPEAN SEARCH REPORT**

Application Number

EP 05 42 5074

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 545 072 A (LANIER E) 2 May 1979 (1979-05-02) | 1,2,6 | B64C39/06 B64C29/00 |
| Y | * page 2, line 67 - page 4, line 17; figures * | 3-5,7-15 | B64C39/08 |
| Y | US 5 303 879 A (BUCHER ET AL) 19 April 1994 (1994-04-19) * column 2, line 38 - line 66; figures * | 4,5,11 | |
| Y | US 3 871 602 A (KISSINGER ET AL) 18 March 1975 (1975-03-18) * column 2, line 15 - column 3, line 64; figures * | 3,5,8-11 | |
| Y | US 3 191 886 A (LEWIS GORDON MANNS ET AL) 29 June 1965 (1965-06-29) * column 5, line 54 - column 6, line 56; figure 10 * | 12-15 | |
| Y | US 3 077 321 A (DUNHAM WILLIAM H) 12 February 1963 (1963-02-12) * figure 1 * | 7 | |

TECHNICAL FIELDS
SEARCHED      (Int.Cl.7)

B64C

The present search report has been drawn up for all claims

| Place of search | Date of completion of the search | Examiner |
|---|---|---|
| Munich | 2 September 2005 | Monica S. O. Navarro |

EPO FORM 1503 03.82 (P04C01)

## ANNEX TO THE EUROPEAN SEARCH REPORT
## ON EUROPEAN PATENT APPLICATION NO.

EP 05 42 5074

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2005

| Patent document cited in search report | | Publication date | Patent family member(s) | | Publication date |
|---|---|---|---|---|---|
| GB 1545072 | A | 02-05-1979 | NONE | | |
| US 5303879 | A | 19-04-1994 | CH | 685692 A5 | 15-09-1995 |
| | | | AT | 152063 T | 15-05-1997 |
| | | | AU | 659787 B2 | 25-05-1995 |
| | | | AU | 3115093 A | 05-08-1993 |
| | | | BR | 9300365 A | 03-08-1993 |
| | | | CA | 2087232 A1 | 30-07-1993 |
| | | | CN | 1080253 A | 05-01-1994 |
| | | | DE | 59208399 D1 | 28-05-1997 |
| | | | EP | 0553490 A1 | 04-08-1993 |
| | | | ES | 2103879 T3 | 01-10-1997 |
| | | | JP | 5262295 A | 12-10-1993 |
| US 3871602 | A | 18-03-1975 | NONE | | |
| US 3191886 | A | 29-06-1965 | GB | 881662 A | 08-11-1961 |
| | | | DE | 1300735 B | 07-08-1969 |
| US 3077321 | A | 12-02-1963 | CH | 402620 A | 15-11-1965 |
| | | | GB | 1020007 A | 16-02-1966 |

EPO FORM P0459

For more details about this annex : see Official Journal of the European Patent Office, No. 12/82